# EUROPEAN PATENT APPLICATION

(11) **EP 2 521 071 A2**
(43) Date of publication of application: **07.11.2012**
(21) Application number: 11004865.9
(22) Date of filing: 15.06.2011
(51) Int. Cl.: G06K 9/34

(54) **Method and system for text segmentation**

(30) Priority: 06.05.2011 US 102373
(71) Applicant: King Abdulaziz City for Science & Technology (KACST), 11442 Riyadh (SA)
(72) Inventor: Abdulkader, Ahmad, 95120 San José, California (US); Al-Omari, Hussein, Khalid, 11442 Riyadh (SA); Khorsheed, Mohammad, Sulaiman, 11442 Riyadh (SA)
(74) Representative: Goddar, Heinz J.

(57) **Abstract**

A method and system for segmenting a text into a plurality of sections is provided. The text may be received in the form of an image. The method involves receiving one or more input labels from a user corresponding to one or more segmentation points of a plurality of segmentation points of the text. The plurality of segmentation points of the text are obtained by applying one or more segmentation heuristics over the text. The one or more input labels provided by the user are utilized to label the plurality of segmentation points of the text. In response to labeling, validation is performed to identify whether a segmentation point of the plurality of segmentation points is a valid segmentation point. Thereafter, based on the validation, a set of valid segmentation points is updated with one or more segmentation points of the plurality of segmentation points. The set of valid segmentation points facilitates segmentation of the text for recognizing the plurality of sections.

## Description

### FIELD OF THE INVENTION

The invention generally relates to method and system for segmentation of a text image. More specifically, the invention relates to a method and system of segmenting an image of text into a plurality of text segments..

### BACKGROUND OF THE INVENTION

Automatic conversion of scanned documents into editable and searchable text requires use of accurate and robust Optical Character Recognition (OCR) systems. OCR systems involve recognition of text from images by segmenting an input image of the text into units of characters. OCR systems for English text have reached a high level of accuracy due to various reasons. One of the main reasons is the ability to preprocess English text down to isolated characters to provide as input to the OCR systems. Each character of English text can be isolated because of the non-touching nature of printed English text. However, scanned images of text with characters that touch each other pose a challenge to the OCR systems and reduce their accuracy when the pitch is variable. Such kinds of characters that touch each other may be found in text associated with various languages.

For example, Arabic scanned text includes a series of touching characters and is therefore harder to segment the text into characters. Further, Arabic text may include dots and accent marks placed above or below the letters to indicate the pronunciation of the letter and the vowel that follows it which presents another challenge to OCR systems. This inhibits known preprocessing techniques designed for English from accurately processing Arabic text. Moreover, Arabic characters are not orthogonal and some of the characters are sub-sets of other characters. This makes the segmentation process complicated as context of the text may need to be taken into consideration.

Another characteristic of Arabic text is that the Arabic text can be written with or without the accent marks that indicate the vowels. Additionally, many Arabic letters include three or four shapes depending on whether the letter is placed at the beginning of a word, at the middle of the word, at the end of the word, or as a standalone letter. Therefore, various combinations are possible with Arabic text due to the accent marks and the location of a letter within a word making processing of Arabic text with present OCR preprocessing systems less accurate. In addition, for images having more than one column of Arabic text and non-text items, the Arabic text associated with each column may vary in font size, font style, font color, etc. Due to the varying font size, neighboring columns may not be accurately segmented.

A technique for segmenting Arabic text involves following black pixels of an image of the text from right to left to identify contours of characters and segment the characters accordingly. Another technique utilizes horizontal or vertical projections for segmenting characters of a text in an image. However, these techniques are completely automated and may not be able to meet up varying characteristics of Arabic texts.

Therefore, there is a need for a method and system of segmenting a text into a plurality of text segments wherein varying characteristics of the text are well considered.

### BRIEF DESCRIPTION OF THE FIGURES

The accompanying figures, where like reference numerals refer to identical or functionally similar elements throughout the separate views and which together with the detailed description below are incorporated in and form part of the specification, serve to further illustrate various embodiments and to explain various principles and advantages all in accordance with the present invention.

FIG. 1 illustrates a flow diagram of a method of segmenting a text in accordance with an embodiment of the invention.

FIG. 2 illustrates a flow diagram of a method of segmenting a text in accordance with another embodiment of the invention.

FIG. 3a-e illustrates schematic diagrams for segmenting an Arabic text in accordance with an embodiment of the invention.

FIG. 4 illustrates a system for segmenting a text in accordance with an embodiment of the invention.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE INVENTION

Before describing in detail embodiments that are in accordance with the invention, it should be observed that the embodiments reside primarily in combinations of method steps and apparatus components related to a method and system for segmenting a text. Accordingly, the apparatus components and method steps have been represented where appropriate by conventional symbols in the drawings, showing only those specific details that are pertinent to understanding the embodiments of the invention so as not to obscure the disclosure with details that will be readily apparent to those of ordinary skill in the art having the benefit of the description herein.

In this document, relational terms such as first and second, top and bottom, and the like may be used solely to distinguish one entity or action from another entity or action without necessarily requiring or implying any actual such relationship or order between such entities or actions. The terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises ...a" does not, without more constraints, preclude the existence of additional identical elements in the process, method, article, or apparatus that comprises the element.

It will be appreciated that embodiments of the invention described herein may be comprised of one or more conventional transaction-clients and unique stored program instructions that control the one or more transaction-clients to implement, in conjunction with certain non-transaction-client circuits, some, most, or all of the functions of a method for segmenting an image for recognizing text in the image. The non-transaction-client circuits may include, but are not limited to, a radio receiver, a radio transmitter, signal drivers, clock circuits, power source circuits, and user input devices. As such, these functions may be interpreted as steps of methods for segmenting an image for recognizing text in the image. Alternatively, some or all functions could be implemented by a state machine that has no stored program instructions, or in one or more application specific integrated circuits (ASICs), in which each function or some combinations of certain of the functions are implemented as custom logic. Of course, a combination of the two approaches could be used. Thus, methods and means for these functions have been described herein. Further, it is expected that one of ordinary skill, notwithstanding possibly significant effort and many design choices motivated by, for example, available time, current technology, and economic considerations, when guided by the concepts and principles disclosed herein will be readily capable of generating such software instructions and programs and ICs with minimal experimentation.

Generally speaking, pursuant to various embodiments, the invention provides a method and system for segmenting a text into a plurality of sections. The method involves receiving one or more input labels from a user corresponding to one or more segmentation points of a plurality of segmentation points of the text. The plurality of segmentation points of the text are obtained by applying one or more segmentation heuristics over the text. The one or more input labels provided by the user are utilized to label the plurality of segmentation points of the text. In response to labeling, validation is performed to identify whether a segmentation point of the plurality of segmentation points is a valid segmentation point. Thereafter, based on the validation, a set of valid segmentation points is updated with one or more segmentation points of the plurality of segmentation points. The set of valid segmentation points facilitates segmentation of the text for recognizing the plurality of sections.

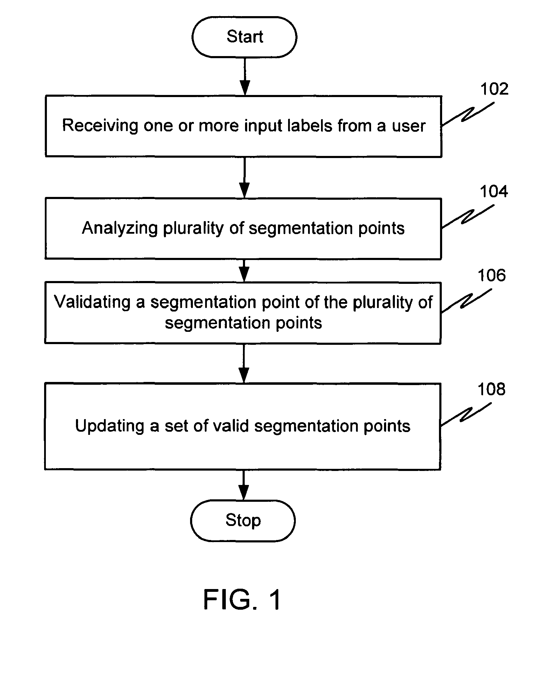

FIG. 1 illustrates a flow diagram of a method of segmenting a text in accordance with an embodiment of the invention. The text is segmented in order to obtain a plurality of text segments of the text. The plurality of text segments may include at least one of characters, word, lines, and special characters. In various embodiments of the invention, the text may be in form of an image. The image may be one of a grayscale image and a color image. The image may be obtained by scanning one or more documents. However, it will be apparent to a person skilled in the art that the text may be obtained in any other form. These documents may be available offline or online. The documents may be handwritten or typed. In order to recognize text from images of the documents, the method at step 102 involves receiving one or more input labels from a user corresponding to one or more segmentation points of a plurality of segmentation points of the text. The plurality of segmentation points are obtained by applying one or more segmentation heuristics over the image of the text. Examples of the one or more segmentation heuristics include but are not limited to, horizontal and vertical pixel density histograms and contour detection based heuristic. By utilizing the one or more segmentation heuristics, the text in the image is marked with a plurality of segmentation points. A segmentation point of the plurality of segmentation points corresponds to a point or a boundary which separates one or more text segments of the text. For example, a segmentation point may separate two characters of the text.

Upon determining the plurality of segmentation points, manual input corresponding to the one or more segmentation points is taken from a user. The manual input is taken by receiving one or more input labels from the user corresponding to one or more segmentation points of the plurality of segmentation points. The one or more input labels may be received from the user utilizing a user interface. Examples of a user interface include but are not limited to, a touch screen, keyboard, mouse and so forth.

The one or more input labels indicate correctness of a segmentation point of the text. Further, the one or more input labels may be received from the user on a sample portion of the image. For example, input labels may be provided by a user corresponding to one or more segmentation points of a part of the text within a small portion of the image. These input labels may then be utilized to check correctness of segmentation points in the entire image of the text. In an embodiment, an input label may be provided as an answer to a query which is generated to the user for the one or more segmentation points. For example, the query may be a question for the user corresponding to checking the correctness of the one or more segmentation points. In response to the query, the user may submit an answer by providing the one or more input labels indicating one or more valid segmentation points of the one or more segmentation points. In another embodiment, an input label may be a binary value indicating the validity of the one or more segmentation points. For example, the user may provide an input label '1' for a valid segmentation point and an input label '0' for an invalid segmentation point. The user may provide the one or more input labels in any other form.

Upon receiving the one or more input labels from the user, analysis of the plurality of segmentation points based on the one or more input labels is performed at step 104. The plurality of segmentation points are analyzed in order to identify a mapping of the one or more segmentation points corresponding to the one or more input labels with the plurality of segmentation points. Based on the mapping, valid segmentation points in the plurality of segmentation points may be identified.

In response to the analysis, a segmentation point of the plurality of segmentation points is validated at step 106. Validation involves identifying whether a segmentation point of the plurality of segmentation points is indicative of a valid segmentation point. The valid segmentation point separates at least two text segments of the text. Once any segmentation point is identified as a valid segmentation point, this valid segmentation point may be added in a set of valid segmentation points. The set of valid segmentation points is created by grouping such segmentation points which may be initially known. In an embodiment, the set of valid segmentation points may be created by grouping some standard segmentation points. For example, a set of valid segmentation point may be created by including some segmentation points, such as dots, spaces, and special characters. Further, the set of segmentation points may include one or more characters already known.

Thereafter, based on the validation the set of valid segmentation points are updated at step 108. Updating involves including one or more segmentation points within the set of valid segmentation points. Therefore, based on validation performed at step 106, the one or more segmentation points which are indicative of valid segmentation points are added in the set of valid segmentation points. The set of valid segmentation point is then utilized for segmenting the text into a plurality of text segments. Various methodologies known in the art may be used for segmenting the text by utilizing the set of valid segmentation points. Upon updating, the set of valid segmentation points may facilitate segmentation of one or more portions of the text. Examples of the one or more portions include but are not limited to a single word, a sentence, and a paragraph. Hence, remaining portions of the text are further analyzed by utilizing the above steps of the flow diagram. The above steps of the flow diagram are performed iteratively so that substantial portion of the text is segmented and a comprehensive set of valid segmentation points is obtained for segmenting the text for recognizing the text.

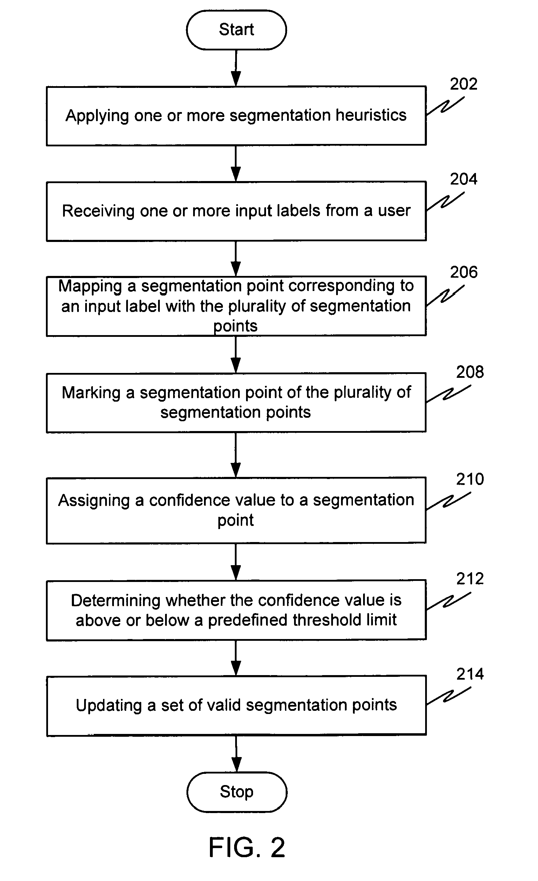

Turning now to FIG. 2, a flow diagram of a method of segmenting text in accordance with another embodiment of the invention is illustrated. At step 202, the method involves applying one or more segmentation heuristics over an image of the text. The image may be one of a grayscale image and a color image. The image may be obtained by scanning one or more documents. These documents may be available offline or online. Further, the documents may be handwritten or typed. The image of the text is analyzed by utilizing the one or more segmentation heuristics such as, but not limited to horizontal and vertical projection, and contour based heuristics. By utilizing the one or more segmentation heuristics, the text in the image is marked with a plurality of segmentation points. A segmentation point of the plurality of segmentation points corresponds to a point or a boundary which separates one or more text segments of the text. For example, a segmentation point may separate two characters of the text.

Upon determining the plurality of segmentation points, one or more input labels are received from a user corresponding to one or more segmentation points of the plurality of segmentation points, at step 204. The one or more input labels may be received from the user by utilizing a user interface. Examples of a user interface include but are not limited to, a touch screen, keyboard, mouse and so forth.

The one or more input labels indicate the correctness of a segmentation point of the text. Further, the one or more input labels may be received from the user on a sample portion of the image. For example, input labels may be provided by a user corresponding to one or more segmentation points of a part of the text within a small portion of the image. These input labels may then be utilized to check correctness of segmentation points in the entire image. In an embodiment, an input label may be provided as an answer to a query which is generated to the user for the one or more segmentation points. The query may be a question for the user corresponding to checking correctness of the one or more segmentation points. In response to the query, the user may provide an answer by providing the one or more input labels for one or more valid segmentation points of the one or more segmentation points. In another embodiment, an input label is a binary value indicating validity of the one or more segmentation points. For example, the user may provide an input label '1' for a valid segmentation point and an input label '0' for an invalid segmentation point. The user may provide the one or more input labels in any other form.

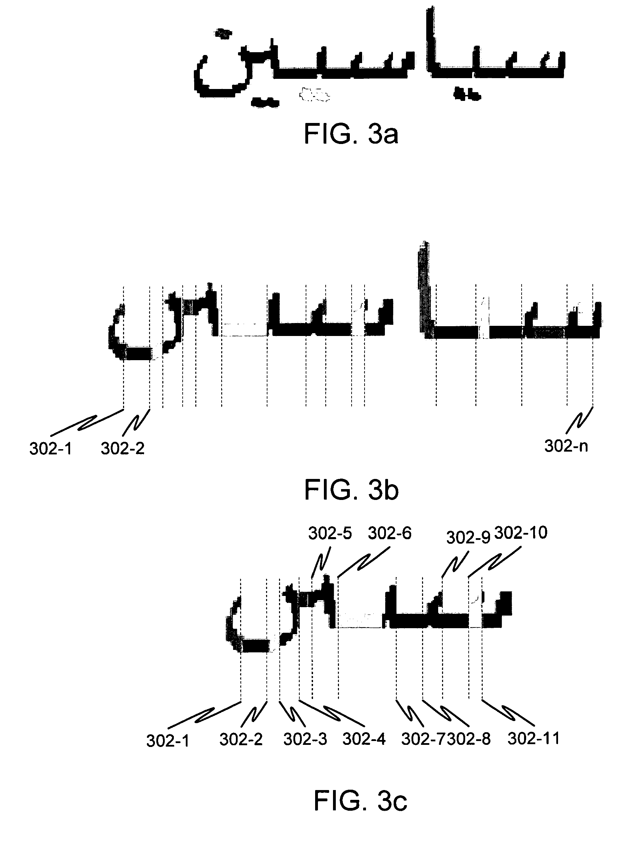

Thereafter, at step 206, mapping of the one or more segmentation points corresponding to the one or more input labels with the plurality of segmentation points is performed. The one or more segmentation points are those segmentation points for which the one or more input labels provided by the user indicate correct segmentation. These segmentation points are compared with the plurality of segmentation points in the text and a mapping between various segmentation points is observed. This is explained in detail in conjunction with FIG. 3a-e.

Based on mapping, marking a segmentation point of the plurality of segmentation points on the text is performed at step 208. Marking involves labeling the segmentation point which matches with the one or more segmentation points corresponding to the one or more input labels. For example, consider a segmentation point in the text similar to a segmentation point labeled as valid by the user. Then such a segmentation point is labeled while marking.

Upon marking, assigning a confidence value to a segmentation point corresponding to the input label is performed at step 210. The confidence value denotes a probability of the segmentation point indicative of a valid segmentation point. Thus, the confidence value is utilized to verify input of the user corresponding to the segmentation point. The confidence level is assigned as "high" to a segmentation point labeled by the user, if it matches with higher number of segmentation points of the plurality of segmentation points. Further, the confidence level of the segmentation point is assigned as "low" in case it matches with less number of segmentation points of the plurality of segmentation points. The confidence level may be zero in case the segmentation point labeled by the user does not match with any segmentation point in the plurality of segmentation points. Value of the confidence level may be assigned by a user. The confidence level may be expressed in a percentage form or in a ratio form.

In an exemplary embodiment, consider that a first segmentation point labeled by a user matches with five segmentation points of the plurality of segmentation points. Further a second segmentation point matches with one segmentation point of the plurality of segmentation points. In this case, a confidence level of the first segmentation point is higher than the confidence level of the second segmentation point.

Value of the confidence level corresponding to a segmentation point is determined with respect to a predefined threshold level at step 212. Determining the confidence level involves identifying whether the confidence level is above or below the predefined threshold level. The predefined threshold level may be specified by a user. The predefined threshold level indicates a permissible value of the confidence level.

Based on the confidence level, a set of valid segmentation points is updated at step 214. The set of valid segmentation points may be created by grouping valid segmentation points which may be initially known. In an embodiment, the set of valid segmentation points may be created by grouping some standard segmentation points. For example, the set of valid segmentation points may be created by including some segmentation points, such as dots, spaces, and special characters. Thereafter, the set of valid segmentation point is continuously updated. Updating involves appending one or more segmentation points within the set of valid segmentation points. Therefore, based on validation performed at step 106, the one or more segmentation points which are indicative of valid segmentation points are added in the set of valid segmentation points. The set of valid segmentation points is utilized for segmenting the text into the plurality of text segments. Various methodologies known in the art may be utilized for segmenting the text by utilizing the set of valid segmentation points. Upon updating, the set of valid segmentation points may facilitate segmentation of one or more portions of the text. Hence, remaining portions of the text are further analyzed by utilizing the above steps of the flow diagram. These steps are performed iteratively so that substantial portion of the text is segmented and a comprehensive set of valid segmentation points is obtained for segmenting the text.

FIG. 3a-e illustrates schematic diagrams for segmenting an Arabic text in accordance with an embodiment of the invention. FIG. 3a illustrates an image of the Arabic text. As shown in FIG. 3a, the Arabic text is written with characters that touch each other. Further, the Arabic text includes one or more dots above or below the main text. Therefore, it is difficult to perform segmentation of image of the Arabic text. The segmentation of Arabic text is included as an example, however the method of segmentation may be utilized for text associated with other languages that include characters that touch each other or join each other.

In order to segment the given Arabic text, one or more segmentation heuristics are applied to the image of the Arabic text. Application of the one or more segmentation heuristics results into plurality of segmentation points. FIG. 3b illustrates the Arabic text with a plurality of segmentation points 302-n, such as segmentation point 302-1, segmentation point 302-2 and so forth. The one or more segmentation heuristics and the plurality of segmentation points are explained in detail in conjunction with FIG. 1 and FIG. 2.

Upon obtaining plurality of segmentation points 302-n, one or more input labels are received from a user corresponding to one or more segmentation points 302-n. One or more segmentation points 302-n may relate to a sample portion of the text. As illustrated in FIG. 3c, the one or more input labels are received from a user for one or more segmentation points 302-n which relate to a first portion of the image of the Arabic text. Therefore, the one or more input labels are received from the user for segmentation point 302-1 through to segmentation point 302-11. In order to receive the one or more input labels, a query is generated for the user. In response to the query, the user is required to validate one or more segmentation points 302-n by providing the one or more input labels. The one or more input labels may be binary values indicating validity of one or more segmentation points 302-n. Thus, in case an input label is '1' for a segmentation point, then the segmentation point is a valid segmentation point according to the user. However, in case an input label is '0' for a segmentation point, then the segmentation point is invalid according to the user. For example, the user may provide input labels as '1' for segmentation point 302-1, segmentation point 302-4, segmentation point 302-6, and segmentation point 302-7. Further, the user may provide input labels as '0' for remaining segmentation points of segmentation point 302-1 through to segmentation point 302-11. The method of receiving the one or more input labels corresponding to the one or more segmentation points, is explained in detail in conjunction with FIG. 1 and FIG. 2.

Based on the one or more input labels, the one or more segmentation points for which the user has provided a true ('1') input label, are utilized for analyzing the plurality of segmentation points in the image of the text. The one or more segmentation points, such as segmentation point 302-1, segmentation point 302-4, segmentation point 302-6, and segmentation point 302-7 are utilized for analyzing one or more segmentation points in the second portion of the image of the Arabic text. Therefore, mapping between the segmentation points marked as valid with the one or more segmentation points in the second portion of the image is performed. The steps of analyzing and mapping are explained in detail in conjunction with FIG. 1 and FIG. 2.

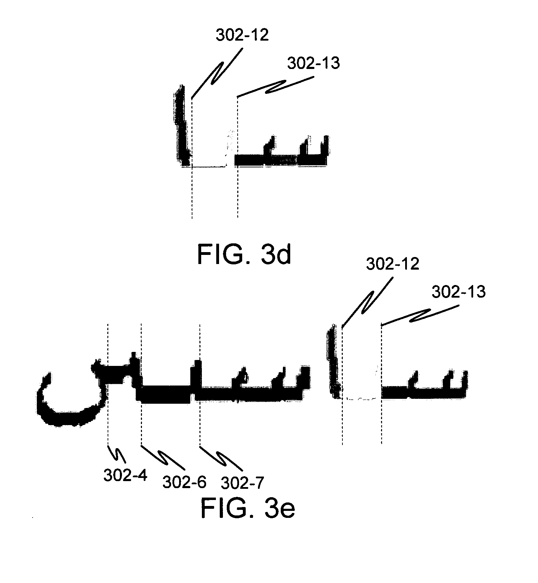

Based on the mapping, the one or more segmentation points in the second portion are marked. For example, as shown in FIG. 3d, segmentation point 302-12 and segmentation point 302-13 are marked. As it can be observed from the FIG. 3c and FIG. 3d, segmentation point 302-6 maps with segmentation point 302-12 and segmentation point 302-7 maps with segmentation point 302-13. Therefore, marking is performed accordingly. Further, a confidence level is assigned to the one or more segmentation points for which the user provided a true ('1') input label. In the given example, confidence level may be assigned as 'high' for segmentation point 302-6 and segmentation point 302-7 as a mapping was identified. Further, a confidence level may be assigned as 'low' for segmentation point 302-1 and segmentation point 302-4 as no mapping was identified. Thereafter, the one or more segmentation points with 'high' confidence level are added in a set of valid segmentation points. The set of valid segmentation points is utilized for segmenting the text into plurality of text segments. Various methodologies known in the art may be utilized for segmenting the text by utilizing the set of valid segmentation points.

Upon updating the set of valid segmentation points, one or more segmentation points in the image which are not labeled are further analyzed. Input labels corresponding to these one or more segmentation points are received from the user. Thereafter, the steps disclosed above are performed iteratively so that substantial portion of the text is segmented and a comprehensive set of valid segmentation points is obtained for segmenting the text.

For example, as illustrated in FIG. 3e after several iterations segmentation point 302-4, segmentation point 302-6, segmentation point 302-7, segmentation point 302-12, and segmentation point 302-13 are identified as valid segmentation points. Subsequently, using these segmentation points, the image of the text may be segmented.

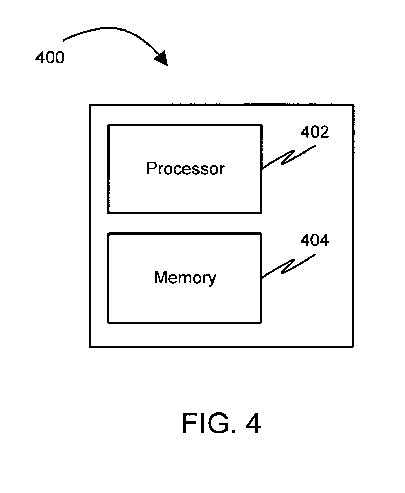

FIG. 4 illustrates a block diagram of a system 400 for segmenting a text in accordance with an embodiment of the invention. As shown in FIG. 4, system 400 includes a processor 402 and a memory 404 coupled to processor 402.

Processor 402 is configured to receive one or more input labels from a user corresponding to one or more segmentation points of a plurality of segmentation points of the text. The plurality of segmentation points are obtained by applying one or more segmentation heuristics over the image of the text. The one or more segmentation heuristics are explained in detail conjunction with FIG. 1 and FIG. 2. A segmentation point of the plurality of segmentation points corresponds to a point or a boundary which separates one or more text segments of the text. For example, a segmentation point may separate two characters of the text. Processor 402 may be coupled to a user interface for receiving the one or more input labels. In this case, the one or more input labels are entered by the user through the user interface. For example, processor 402 may be coupled to at least one of a touch screen, keyboard, mouse and so forth.

Processor 402 is further configured to analyze the plurality of segmentation points based on the one or more input labels. The plurality of segmentation points are analyzed in order to identify a mapping of the one or more segmentation points corresponding to the one or more input labels with the plurality of segmentation points. Based on the mapping, valid segmentation points in the plurality of segmentation points may be identified.

Thereafter processor 402 performs validation of a segmentation point of the plurality of segmentation points. Validation involves identifying whether a segmentation point of the plurality of segmentation points is indicative of a valid segmentation point. The valid segmentation point separates at least two text segments of the text. Once any segmentation point is identified as a valid segmentation point, this valid segmentation point may be added in a set of valid segmentation points. The set of valid segmentation points is created by grouping such segmentation points which may be initially known. In an embodiment, the set of valid segmentation points may be created by grouping some standard segmentation points. For example, the set of valid segmentation point may be created by including some segmentation points, such as dots, spaces, and special characters.

Based on the validation, the set of valid segmentation points are updated. Updating involves including one or more segmentation points within the set of valid segmentation points. The set of valid segmentation point is then utilized for segmenting the text into a plurality of text segments. This is explained in detail in conjunction with FIG. 1 and FIG. 2.

The set of validation points thus obtained is stored in memory 404. Any other information, such as an image of the text, plurality of segmentation point and one or more input labels may also be stored in memory 404.

Various embodiments of the invention provide methods and systems for segmenting a text, wherein the text is in the form of an image. The method and system enable efficient segmentation of text with characters that are touching each other, such as Arabic text. The method involves receiving user inputs for a small set of segmentation points which are identified by applying automated techniques, such as segmentation heuristics. Therefore, varying characteristics of the text which may not be noticed by automated methods are well considered during user input. Further, the input provided by the user is applied to a large set of segmentation point to identify valid segmentation points by using automated techniques. These valid segmentation points are identified and collected in an iterative manner. Therefore, an active learning approach is followed for identifying valid segmentation points for the text. The active learning approach enables development of a set of valid segmentation points which is continuously updated. Hence, a self training technique is utilized for preparing the set of valid segmentation points.

Those skilled in the art will realize that the above recognized advantages and other advantages described herein are merely exemplary and are not meant to be a complete rendering of all of the advantages of the various embodiments of the present invention.

In the foregoing specification, specific embodiments of the present invention have been described. However, one of ordinary skill in the art appreciates that various modifications and changes can be made without departing from the scope of the present invention as set forth in the claims below. Accordingly, the specification and figures are to be regarded in an illustrative rather than a restrictive sense, and all such modifications are intended to be included within the scope of the present invention. The benefits, advantages, solutions to problems, and any element(s) that may cause any benefit, advantage, or solution to occur or become more pronounced are not to be construed as a critical, required, or essential features or elements of any or all the claims. The present invention is defined solely by the appended claims including any amendments made during the pendency of this application and all equivalents of those claims as issued.

## Claims

1. A method of segmenting a text into a plurality of text segments, the method comprising:
receiving at least one input label from a user corresponding to at least one segmentation point of a plurality of segmentation points of the text;
analyzing the plurality of segmentation points based on the at least one input label received;
validating whether a segmentation point of the plurality of segmentation points is indicative of a valid segmentation point in response to analyzing; and
updating a set of valid segmentation points with at least one segmentation point of the plurality of segmentation points based on the validation, wherein the set of valid segmentation points facilitates segmentation of the text into the plurality of text segments.

2. The method of claim 1, wherein the text is an Arabic text or is in form of an image.

3. The method of claim 1 or 2, wherein a valid segmentation point separates at least two text segments of the plurality of text segments of the text.

4. The method of any one of claims 1 to 3, wherein a text segment of the plurality of text segments comprises at least one of characters, words, and lines.

5. The method of any one of claims 1 to 4, wherein the plurality of segmentation points are obtained by applying at least one segmentation heuristic to the text.

6. The method of any one of claims 1 to 5, wherein an input label corresponds to a valid segmentation point of the text or is an answer for a query, the query is generated corresponding to a segmentation point of the at least one segmentation point, or is a binary value, the binary value indicates validity of a segmentation point.

7. The method of any one of claims 1 to 6, wherein analyzing comprises mapping a segmentation point corresponding to an input label with the plurality of segmentation points, in particular wherein analyzing further comprises marking a segmentation point of the plurality of segmentation points based on mapping with the segmentation point corresponding to the input label.

8. The method of any one of claims 1 to 7, wherein validating comprises assigning a confidence value to a segmentation point corresponding to an input label, wherein the confidence value denotes a probability of the segmentation point indicative of a valid segmentation point, in particular wherein validating further comprises determining whether the confidence value is above or below a predefined threshold limit.

9. The method of any one of claims 1 to 8, wherein updating comprises appending a segmentation point corresponding to an input label of the at least one input label in the set of valid segmentations points, wherein a confidence value of the segmentation point is above a predefined threshold limit.

10. A computer program product comprising a computer usable medium having a computer readable program method for segmenting a text into a plurality of text segments, wherein the computer readable program when executed on a computer causes the computer to carry out the method of any one of the claims 1 to 9.

11. A system for segmenting a text into a plurality of text segments, the system comprising:
A processor, wherein the processor is configured to:
receive at least one input label from a user corresponding to at least one segmentation point of a plurality of segmentation points of the text;
analyze the plurality of segmentation points based on the at least one input label received;
validate whether a segmentation point of the plurality of segmentation points is indicative of a valid segmentation point in response to labelling; and
updated a set of valid segmentation points with at least one segmentation point of the plurality of segmentation points based on the validation, wherein the set of valid segmentation points facilitates segmentation of the text into the plurality of text segments; and
a memory for storing the set of valid segmentation points.

12. The system of claim 11, wherein the text is an Arabic text.

13. The system of claim 11 or 12, wherein the processor is configured to analyze by:
mapping a segmentation point corresponding to an input label with the plurality of segmentation points; and
marking a segmentation point of the plurality of segmentation points based on mapping with the segmentation point corresponding to the input label.

14. The system of any one of claims 11 to 13, wherein the processor is configured to validate by:
assigning a confidence value to a segmentation point corresponding to an input label, wherein the confidence value denotes a probability of the segmentation point indicative of a valid segmentation point; and
determining whether the confidence value is above or below a predefined threshold limit.

15. The system of any one of claims 11 to 14, wherein the processor is configured to update the set of valid segmentation points by appending a segmentation point corresponding to an input label of the at least one input label in the set of valid segmentation points, wherein a confidence value of the segmentation point is above a predefined threshold limit.
